Europäisches Patentamt

European Patent Office

Office européen des brevets

(11) Veröffentlichungsnummer : **0 506 646 A1**

## (12) EUROPÄISCHE PATENTANMELDUNG

(21) Anmeldenummer : **92890050.5**

(22) Anmeldetag : **06.03.92**

(51) Int. Cl.$^5$ : **A23L 3/22,** A23L 2/20, A23C 3/033

(30) Priorität : **25.03.91 AT 654/91**

(43) Veröffentlichungstag der Anmeldung :
**30.09.92 Patentblatt 92/40**

(84) Benannte Vertragsstaaten :
**AT CH DE FR IT LI**

(71) Anmelder : **Prugner, Siegfried
Altenberg 64
A-8295 St. Johann i.d. Haide (AT)**

(72) Erfinder : **Prugner, Siegfried
Altenberg 64
A-8295 St. Johann i.d. Haide (AT)**

(74) Vertreter : **Gibler, Ferdinand, Dipl.Ing. Dr. techn.
Dorotheergasse 7/14
A-1010 Wien (AT)**

(54) **Einrichtung zum Pasteurisieren von Flüssigkeiten mit einem Wärmeaustauscher.**

(57)   Einrichtung zum Pasteurisieren von Flüssigkeiten mit einem Wärmetauscher der in seinem
Sekundärkreis von der zu pasteurisierenden
Flüssigkeit und dessen Primärkreis von einem
Heizmedium durchströmbar ist, wobei dem
Auslauf des Sekundärkreises eine Abfüllanlage
nachgeschaltet ist und eine zur Erwärmung des
den Primärkreis des Wärmetauschers durchströmenden Heizmediums erhitzende Wärmequelle vorgesehen ist, die von einem im Auslauf
des Sekundärkreises des Wärmetauschers angeordneten Temperaturfühler gesteuert ist. Um
bei einer solchen Einrichtung die Temperatur
der zu pasteurisierenden Flüssigkeit sehr genau
einhalten zu können, ist vorgesehen, daß im
Auslauf des Sekundärkreises des Wärmetauschers (4) eine der Abfüllanlage vorgeschaltete
verstellbare Drossel (11) vorgesehen ist, die von
einem im Auslauf des Sekundärkreises des Wärmetauschers (4) angeordneten Temperaturfühler (14) gesteuert ist.

EP 0 506 646 A1

Die Erfindung bezieht sich auf eine Einrichtung zum Pasteurisieren von Flüssigkeiten mit einem Wärmetauscher der in seinem Sekundärkreis von der zu pasteurisierenden Flüssigkeit und dessen Primärkreis von einem Heizmedium durchströmbar ist, wobei dem Auslauf des Sekundärkreises eine Abfüllanlage nachgeschaltet ist und eine zur Erwärmung des den Primärkreis des Wärmetauschers durchströmenden Heizmediums erhitzende Wärmequelle vorgesehen ist, die von einem im Auslauf des Sekundärkreises des Wärmetauschers angeordneten Temperaturfühler gesteuert ist.

Bei bekannten derartigen Einrichtungen ist die Abfüllanlage, die eingangsseitig zumeist einen Pufferbehälter aufweist, direkt vom Auslauf des Sekundärkreises des Wärmetauschers verbunden.

Dadurch ergibt sich jedoch der Nachteil, daß Schwankungen der Temperatur der den Sekundärkreis des Wärmetauschers verlassenden zu pasteurisierenden Flüssigkeit nicht zu vermeiden sind. Das stellt einen gravierenden Nachteil dar, da die zum Pasteurisieren erforderliche Temperatur einerseits nicht unterschritten werden darf, um die Haltbarkeit der Flüssigkeit in ausreichendem Maße sicherzustellen und anderseits möglichst nicht überschritten werden soll, um eine zu hohe Belastung der Flüssigkeit, die zu unerwünschten Veränderungen derselben führen können, zu vermeiden.

Bei den bekannten Einrichtungen erfolgt eine Steuerung der Temperatur der zu pasteurisierenden Flüssigkeit ausschließlich über die Temperatur des Heizmediums, wodurch sich eine entsprechende Trägheit der Regelung ergibt, bei der Schwankungen der Temperatur der zu pasteurisierenden Flüssigkeit nicht zu vermeiden sind.

Ziel der Erfindung ist es, diese Nachteile zu vermeiden und eine Einrichtung der eingangs erwähnten Art vorzuschlagen, bei der eine sehr genaue Einhaltung der Temperatur der zu pasteurisierenden Flüssigkeit möglich ist. Erfindungsgemäß wird dies dadurch erreicht, daß im Auslauf des Sekundärkreises des Wärmetauschers eine der Abfüllanlage vorgeschaltete verstellbare Drossel vorgesehen ist, die von einem im Auslauf des Sekundärkreises des Wärmetauschers angeordneten Temperaturfühler gesteuert ist.

Auf diese Weise ist eine sehr feinfühlige Regelung der Temperatur der den Sekundärkreis des Wärmetauschers durchströmenden Flüssigkeit möglich, da neben der Regelung der Temperatur des Heizmediums auch die Verweilzeit der zu pasteurisierenden Flüssigkeit im Sekundärkreis des Wärmetauschers gesteuert werden kann. Dadurch ist eine weitgehend exakte Einhaltung der vorgesehenen Temperatur möglich.

Nach einem weiteren Merkmal der Erfindung kann vorgesehen sein, daß die verstellbare Drossel in einem Zweig einer Parallelschaltung mit einem zweiten, eine feste Drossel aufweisenden Zweig angeordnet ist, und der Temperaturfühler in dem die feste Drossel aufweisenden Zweig angeordnet ist.

Durch diese Maßnahmen wird erreicht, daß der die Temperatur der den Sekundärkreis des Wärmetauschers durchströmenden Flüssigkeit erfassende Fühler stets von einer gleichbleibenden Menge an Flüssigkeit pro Zeiteinheit umströmt ist. Dadurch werden Fehlmessungen der Temperatur aufgrund einer unterschiedlichen Umströmung des Temperaturfühlers vermieden. Durch die vorgeschlagenen Maßnahmen ist auch sichergestellt, daß eben eine Änderung des Durchflusses durch den Sekundärkreis keinen Einfluß auf die Umströmung des den Durchfluß durch den Sekundärkreis strömenden Mediums hat.

Nach einem weiteren Merkmal der Erfindung kann vorgesehen sein, daß der die verstellbare Drossel steuernde Temperaturfühler als Dampfdruckfühler ausgebildet ist, der direkt die verstellbare Drossel antreibt.

Durch diese Maßnahmen ergibt sich ein in konstruktiver Hinsicht sehr einfacher Aufbau.

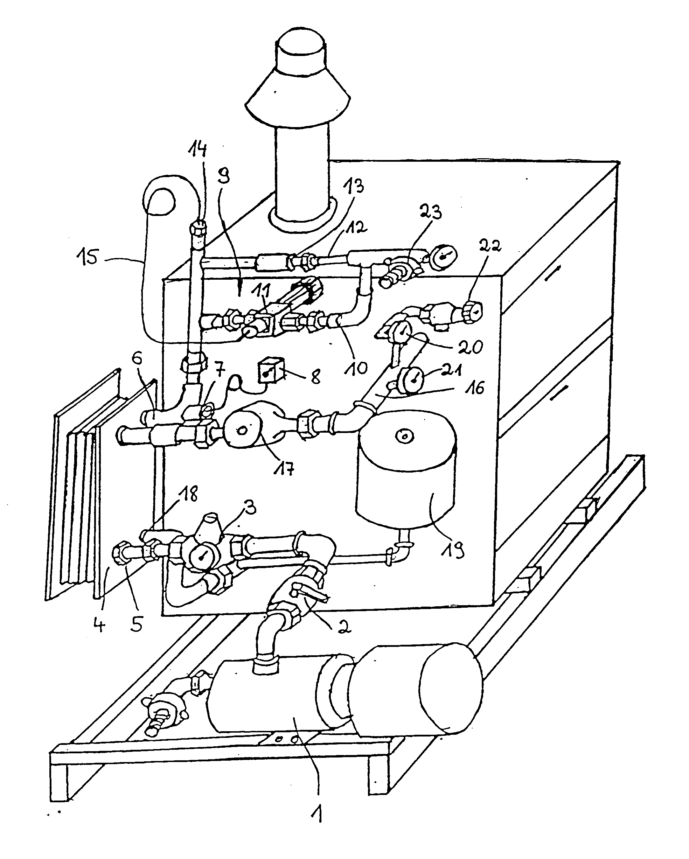

Die Erfindung wird nun anhand der Zeichnung näher erläutert, die schematisch eine erfindungsgemäße Einrichtung zeigt.

Die Pumpe 1 fördert die zu pasteurisierende Flüssigkeit, z. B. Most, über ein Absperrventil 2, das auch zur Voreinstellung der Durchflußmenge von Hand aus dient, und ein Druckminderventil 3, das den eingestellten Druck im wesentlichen konstant hält, zum einlaß 5 des Sekundärkreises eines Wärmetauschers 4, der als Plattenwärmetauscher ausgebildet ist und dessen Primärkreis von einem Heizmedium im Gegenstrom durchströmt ist. Am Ausgang 6 des Wärmetauschers 4 ist ein Temperaturfühler 7 angeordnet, der vom gesamten durch den Sekundärkreis des Wärmetauschers hindurchströmenden Flüssigkeitsstrom umspült ist und der auf die Steuerung der nicht weiter dargestellten Heizeinrichtung zur Erwärmung des durch den Primärkreis des Wärmetauschers strömenden Heizmediums einwirkt. Weiters steuert dieser Temperaturfühler 7 auch eine Temperaturanzeige 8.

Der Ausgang 6 des Sekundärkreises des Wärmetauschers 4 ist weiters mit einer Parallelschaltung 9 zweier Zweige verbunden.

Dabei ist in dem Zweig 10 eine verstellbare Drossel 11 angeordnet und in dem Zweig 12 eine feste Drossel 13, deren Drosselquerschnitt betriebsmäßig nicht veränderbar ist. In dem Zweig 12 ist ein weiterer Temperaturfühler 14 angeordnet, der von dem durch die feste Drossel 13 bestimmten Teilstrom der zu pasteurisierenden Flüssigkeit umspült ist, wobei dieser Teilstrom durch die Drossel 13 konstant gehalten wird.

Deser Temperaturfühler 14 ist mit der verstellbaren Drossel 11 im Zweig 10 der Parallelschaltung 9 verbunden, wobei diese Temperaturfühler 14 vorteilhafterweise als Dampfdruckfühler ausgebildet ist, der die verstellbare Drossel direkt steuert.

Dieser Temperaturfühler ist über eine Dampfkammer, die von der Flüssigkeit umspült ist und über eine dichte Leitung 15 mit dem z.B. durch einen Balg gebildeten Antrieb der verstellbaren Drossel 22 verbunden, der auf einen Ventilkörper derselben einwirkt und diesen gegen eine Drosselöffnung verstellt. Bei einer Änderung der Temperatur der den Temperaturfühler 14 umströmenden Flüssigkeit ändert sich auch der Druck in der Dampfkammer des Fühlers 14 und damit auch die auf den Balg des Antriebes der verstellbaren Drossel ausgeübte Kraft, sodaß es zu einer Änderung der Stellung des Ventilkörpers der verstellbaren Drossel gegenüber deren Drosselspaltes kommt.

Dadurch ändert sich aber auch der Durchfluß durch den Sekundärkreis des Wärmetauschers 4 und, da der Druck durch das Druckminderventil 3 konstant gehalten wird, auch die Verweilzeit der Füssigkeit im Sekundärkreis des Wärmetauschers 4. Damit ändert sich aber bei konstanter Temperatur des Heizmediums im Primärkreis des Wärmetauschers 4 auch die Temperatur der den Sekundärkreis des Wärmetauschers 4 durchströmenen Flüssigkeit am Ausgang des Sekundärkreises.

Das Heizmedium gelangt von der nicht dargestellten Wärmequelle, z.B. einem von einem Brenner beaufschlagten Wärmetauscher über die Rohrleitung 16 zu einer Umwälzpumpe 17, die für die erforderliche Umwälzung des Heizmendiums sorgt und das Heizmedium durch den Primärkreis des Wärmetauschers 4 treibt. Das aus dem Auslaß 18 des Primärwärmetauschers 4 austretende ausströmende Heizmedium gelangt über einen Pufferbehälter 19 wieder zu der nicht dargestellten Wärmequelle.

In der Leitung 16 sind ein Temperaturfühler 20 und ein Druckmesser angeordnet, wobei der Durchfluß durch die Leitung 16 durch ein Membranventil 22 einstellbar ist.

Die nicht weiter dargestellte Abfüllanlage ist an dem Ausgang 23 der Parallelschaltung 9 angeschlossen.

**Patentansprüche**

1. Einrichtung zum Pasteurisieren von Flüssigkeiten mit einem Wärmetauscher der in seinem Sekundärkreis von der zu pasteurisierenden Flüssigkeit und dessen Primärkreis von einem Heizmedium durchströmbar ist, wobei dem Auslauf des Sekundärkreises eine Abfüllanlage nachgeschaltet ist und eine zur Erwärmung des den Primärkreis des Wärmetauschers durchströmenden Heizmediums erhitzende Wärmequelle vorgesehen ist, die von einem im Auslauf des Sekundärkreises des Wärmetauschers angeordneten Temperaturfühler gesteuert ist, dadurch gekennzeichnet, daß im Auslauf des Sekundärkreises des Wärmetauschers (4) eine der Abfüllanlage vorgeschaltete verstellbare Drossel (11) vorgesehen ist, die von einem im Auslauf des Sekundärkreises des Wärmetauschers (4) angeordneten Temperaturfühler (14) gesteuert ist.

2. Einrichtung nach Anspruch 1, dadurch gekennzeichnet, daß die verstellbare Drossel (11) in einem Zweig (10) einer Parallelschaltung mit einem zweiten, eine feste Drossel (13) aufweisenden Zweig (12) angeordnet ist, und der Temperaturfühler (14) in dem die feste Drossel (13) aufweisenden Zweig (12) angeordnet ist.

3. Einrichtung nach Anspruch 1 oder 2, dadurch gekennzeichnet, daß der die verstellbare Drossel (11) steuernde Temperaturfühler (14) als Dampfdruckfühler ausgebildet ist, der direkt die verstellbare Drossel (11) antreibt.

Europäisches Patentamt

**EUROPÄISCHER RECHERCHENBERICHT**

Nummer der Anmeldung

EP 92 89 0050

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-1 977 738 (RAYMOND E. OLSON) <br> * Seite 3, Zeile 7 - Zeile 51; Abbildungen 1,2B * | 1-3 | A23L3/22 <br> A23L2/20 <br> A23C3/033 |
| X | US-A-4 313 370 (SIGMUND P. SKOLI ET AL.) <br> * Spalte 2, Zeile 44 - Zeile 65 * <br> --- | 1,3 | |
| X | US-A-3 451 471 (BENGT ARNE PALM) <br> * Spalte 3, Zeile 1 - Zeile 35 * <br> * Spalte 4, Zeile 23 - Zeile 51; Abbildung 1 * <br> --- | 1 | |
| X | US-A-2 392 197 (H.L. SMITH JR. ET AL.) <br> * Seite 3, Zeile 54 - Seite 4, Zeile 3 * <br> --- | 1 | |
| X | EP-A-0 041 670 (HOECHST AG) <br> * Zusammenfassung; Abbildung 1 * <br> * Seite 5, Zeile 26 - Zeile 32 * <br> --- | 1 | |
| A | WO-A-8 705 189 (INSTITUT NATIONAL DE LA RECHERCHE AGRONOMIQUE) <br> * Seite 8, Zeile 19 - Seite 9, Zeile 35 * <br> ----- | 1 | RECHERCHIERTE SACHGEBIETE (Int. Cl.5) <br><br> A23L <br> A23C |

Der vorliegende Recherchenbericht wurde für alle Patentansprüche erstellt

| Recherchenort | Abschlußdatum der Recherche | Prüfer |
|---|---|---|
| BERLIN | 26 JUNI 1992 | ALVAREZ ALVAREZ C. |